# EUROPEAN PATENT APPLICATION

(11) **EP 2 551 136 A1**
(43) Date of publication of application: **30.01.2013**
(21) Application number: 11759284.0
(22) Date of filing: 16.03.2011
(51) Int. Cl.: B60J 1/00, B32B 17/10, B32B 37/24, C03C 27/12

(54) **METHOD OF MANUFACTURING VEHICLE WINDOW PANE MEMBER**

(30) Priority: 25.03.2010 JP 2010070103
(71) Applicant: Asahi Glass Company, Limited, Tokyo 100-8405 (JP)
(72) Inventor: NIIYAMA, Satoshi, Tokyo 100-8405 (JP); ITO, Hiroshige, Tokyo 100-8405 (JP); TSUSHIMA, Hitoshi, Tokyo 100-8405 (JP)
(74) Representative: Müller-Boré & Partner Patentanwälte
(86) International application number: PCT/JP2011/056315
(87) International publication number: WO 2011/118478

(57) **Abstract**

The present invention relates to a process for manufacturing a window material for vehicles, the window material including a curved glass plate, a curved resin plate provided at a side of a concave surface of the curved glass plate and curving along a shape of the curved glass plate, a resin layer sandwiched between the curved glass plate and the curved resin plate, and a sealing portion surrounding a periphery of the resin layer, the process including the following steps (a1) to (d1): (a1) a step of applying a liquid curable resin composition for sealing portion formation to a periphery of a concave surface of a curved glass plate to form an uncured sealing portion; (b1) a step of supplying a liquid curable resin composition for resin layer formation to a region surrounded by the uncured sealing portion; (c1) a step of laminating a curved resin plate on the liquid curable resin composition for resin layer formation under a reduced-pressure atmosphere of 100 Pa or less such that a convex surface of the curved resin plate faces a side of the curable resin composition for resin layer formation, thereby obtaining a laminate in which an uncured resin layer comprising the curable resin composition for resin layer formation is sealed by the curved glass plate, the curved resin plate and the uncured sealing portion; and (dl) a step of curing the uncured sealing portion and the uncured resin layer in a state that the laminate is placed under a pressure atmosphere of 50 kPa or more.

## Description

### TECHNICAL FIELD

The present invention relates to a process for manufacturing a window material for vehicles, such as a windshield of automobiles.

### BACKGROUND ART

A laminated glass including two curved glass plates bonded with an interlayer of a film-shaped polyvinyl butyral is well known as a window material for vehicles, such as a windshield of automobiles.

In recent years, with the increased interest in environmental problems, a body of a vehicle is required to decrease its weight to thereby reduce fuel consumption. However, in a case where a thickness of a glass plate is decreased for weight saving of a laminated glass, properties of a laminated glass, such as penetrating resistance and sound insulating properties, are deteriorated.

The following laminated member is proposed as a substitute for a laminated glass, that has satisfied both of weight saving and properties of a laminated glass (Patent Document 1).
(1) A transparent laminated member including a glass plate and a polycarbonate plate that are bonded with an interlayer of a film-shaped ethylene-vinyl acetate copolymer.

The transparent laminated member (1) is produced by a process of placing a laminate including a glass plate, a polycarbonate plate and a film-shaped interlayer sandwiched therebetween, in a vacuum bag, performing vacuum deaeration therein, transferring the vacuum bag containing the laminate to an oven while holding the deaeration state, and heating. However, in this process, excessive pressure and heat are simultaneously applied in the vacuum bag, and as a result, the polycarbonate plate deforms or is laminated in a heating state. Therefore, the transparent laminated member may deform by difference in thermal expansion between the glass plate and the polycarbonate plate in the course of cooling to ordinary temperature after laminating.

The following process is proposed as a method of laminating two curved glass plates without using a film-shaped interlayer (Patent Document 2).
(2) A seal-shaped material having several openings is adhered to a periphery of a concave surface of a first glass plate, and a liquid thermosetting resin is then supplied to the concave surface of the first glass plate. A second glass plate is placed on the first glass plate through the liquid thermosetting resin, and pressed to spread the liquid thermosetting resin between the first glass plate and the second glass plate, and excess thermosetting resin is discharged from the openings. The liquid thermosetting resin is cured by heating in a state of maintaining an interval between the first glass plate and the second glass plate constant, thereby forming an interlayer.

However, in the process (2), air bubbles are easily generated in the liquid thermosetting resin sandwiched between the first glass plate and the second glass plate, and the air bubbles remain in the interlayer of a laminated glass.

### BACKGROUND ART DOCUMENT

### PATENT DOCUMENT

Patent Document 1: JP-A-2008-037019
Patent Document 2: JP-A-2007-197288

### SUMMARY OF THE INVENTION

### PROBLEMS THAT THE INVENTION IS TO SOLVE

The present invention provides a process for manufacturing a window material for vehicles, that can produce a window material for vehicles satisfying both weight saving and properties of a laminated glass, can sufficiently suppress remaining of air bubbles in a resin layer sandwiched between a curved glass plate and a curved resin plate, and suppresses deformation of the curved resin plate and the window material for vehicles.

A process for manufacturing a window material for vehicles according to the present invention, the window material comprising a curved glass plate, a curved resin plate provided at a side of a concave surface of the curved glass plate and curving along a shape of the curved glass plate, a resin layer sandwiched between the curved glass plate and the curved resin plate, and a sealing portion surrounding a periphery of the resin layer, comprises the following steps (a1) to (d1):
(a1) a step of applying a liquid curable resin composition for sealing portion formation to a periphery of a concave surface of a curved glass plate to form an uncured sealing portion;
(b1) a step of supplying a liquid curable resin composition for resin layer formation to a region surrounded by the uncured sealing portion;
(c1) a step of laminating a curved resin plate on the liquid curable resin composition for resin layer formation under a reduced-pressure atmosphere of 100 Pa or less such that a convex surface of the curved resin plate faces a side of the curable resin composition for resin layer formation, thereby obtaining a laminate in which an uncured resin layer comprising the curable resin composition for resin layer formation is sealed by the curved glass plate, the curved resin plate and the uncured sealing portion; and
(d1) a step of curing the uncured sealing portion and the uncured resin layer in a state that the laminate is placed under a pressure atmosphere of 50 kPa or more.

Additionally, a process for manufacturing a window material for vehicles according to the present invention, the window material comprising a curved glass plate, a curved resin plate provided at a side of a concave surface of the curved glass plate and curving along a shape of the curved glass plate, a resin layer sandwiched between the curved glass plate and the curved resin plate, and a sealing portion surrounding a periphery of the resin layer, comprises the following steps (a2) to (d2):
(a2) a step of applying a liquid curable resin composition for sealing portion formation to a periphery of a convex surface of a curved resin plate to form an uncured sealing portion;
(b2) a step of supplying a liquid curable resin composition for resin layer formation to a region surrounded by the uncured sealing portion;
(c2) a step of laminating a curved glass plate on the curable resin composition for resin layer formation under a reduced-pressure atmosphere of 100 Pa or less such that a concave surface of the curved glass plate faces a side of the curable resin composition for resin layer formation, thereby obtaining a laminate in which an uncured resin layer comprising the curable resin composition for resin layer formation is sealed by the curved glass plate, the curved resin plate and the uncured sealing portion; and
(d2) a step of curing the uncured sealing portion and the uncured resin layer in a state that the laminate is placed under a pressure atmosphere of 50 kPa or more.

### ADVANTAGE OF THE INVENTION

According to the process for manufacturing a window material for vehicles of the present invention, a window material for vehicles satisfying both of weight saving and properties of a laminated glass can be manufactured, remaining of air bubbles in a resin layer sandwiched between a curved glass and a curved resin plate can sufficiently be suppressed, and a curable resin composition can be cured without heating, whereby deformation of the curved resin plate and the obtained-window material for vehicles is suppressed.

### BRIEF DESCRIPTION OF THE DRAWINGS

Fig. 1 is a cross-sectional view showing one example of a window material for vehicles.
Fig. 2 is a plan view showing one example of a state of step (a1).
Fig. 3 is a cross-sectional view showing one example of a state of step (a1).
Fig. 4 is a plan view showing one example of a state of step (b1).
Fig. 5 is a cross-sectional view showing one example of a state of step (b1).
Fig. 6 is a cross-sectional view showing one example of a state of step (c1).

### MODE FOR CARRYING OUT THE INVENTION

In the present description, the term "transparent" means to have optical transparency, and the term "(meth)acrylate" means acrylate or methacrylate.

### <Window material for vehicles>

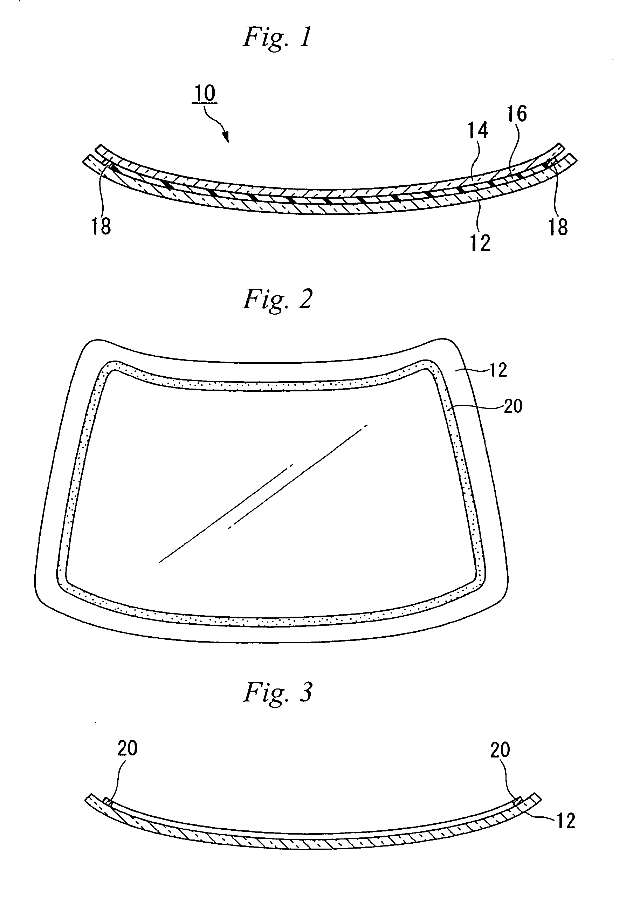

Fig. 1 is a cross-sectional view showing one example of a window material for vehicles in the present invention.
A window material 10 for vehicles includes a curved glass plate 12, a curved resin plate 14, a resin layer 16 sandwiched between the curved glass plate 12 and the curved resin plate 14, and a sealing portion 18 surrounding the periphery of the resin layer 16.

Shape of the window material 10 for vehicles is generally a curved nearly trapezoidal shape in the case of a windshield for automobiles.
Size of the window material 10 for vehicles is appropriately determined according to an attachment position (intended use) in vehicles.
Sizes of the curved glass plate 12 and the curved resin plate 14 are nearly equal to each other, but depending on the attachment position (intended use), the curved glass plate 12 is sometimes slightly larger than the curved resin plate 14.

### (Curved glass plate)

The curved glass plate 12 is a member facing the outside of vehicles requiring scratch resistance, weather resistance and the like when the window material 10 for vehicles has been attached to vehicles.

The curved glass plate 12 is a transparent glass plate having been subjected to bending process. One surface of the curved glass plate 12 is a convex surface, and other surface thereof is a concave surface.
Curvature radius of curve of the curved glass plate 12 is appropriately determined according to the attachment position (intended use) in vehicles.

The glass plate includes conventional glass plates such as a soda-lime glass plate, and a heat-absorbing glass rich in iron (a blue glass plate or a green glass plate) is preferred. A tempered glass plate may be used to increase safety. The tempered glass plate can use a tempered glass plate obtained by a thermal tempering method or a chemical tempering method.

Thickness of the curved glass plate 12 is preferably from 1.0 to 5.0 mm from the standpoints of mechanical strength and transparency, and more preferably from 1.5 to 3.0 mm from the standpoint of thinning of the window material 10 for vehicles.

### (Curved resin plate)

The curved resin plate 14 is a member facing the inside of vehicles requiring penetrating resistance and the like when the window material 10 for vehicles has been attached to vehicles. When a member facing the inside of vehicles, in the conventional laminated glass is replaced with the curved resin plate 14, thinning (weight saving) is possible while maintaining mechanical strength of the window material 10 for vehicles.

The curved resin plate 14 is a transparent resin plate having been subjected to bending process. One surface of the curved resin plate 14 is a convex surface, and other surface thereof is a concave surface.
Curvature radius of curve of the curved resin plate 14 is nearly the same as that of the curved glass plate 12. The curvature radius of the curved resin plate can be made to be slight smaller than that of the curved glass plate.

Materials of the curved resin plate 14 include resin materials having high transparency (polycarbonate, polymethyl methacrylate and the like), and from the standpoint of difficult breakage, polycarbonate is preferred.
Hard coat treatment may be applied to the concave surface of the curved resin plate 14 for the purpose of imparting scratch resistance thereto, and a protective film may be adhered to the concave surface.

Thickness of the curved resin plate 14 is preferably from 0.3 to 3.0 mm from the standpoints of mechanical strength and transparency, and more preferably from 0.5 to 2.0 mm from the standpoint of thinning of the window material 10 for vehicles.

### (Resin layer)

The resin layer 16 is a layer obtained by curing a liquid curable resin composition for resin layer formation described hereinafter. In the window material 10 for vehicles, a liquid curable resin composition for resin layer formation in which elastic modulus of a resin after curing is decreased is preferred. Since thermal expansion coefficients of the curved glass plate 12 and the curved resin plate 14 are different from each other, deviation occurs in a surface direction between the curved glass plate 12 and the curved resin layer 14 by thermal expansion and thermal shrinkage. However, when elastic modulus of the resin is small, the resin can follow the deviation in a surface direction, and exfoliation at the interface can be suppressed.

Thickness of the resin layer 16 is preferably from 0.1 to 2.0 mm, and more preferably from 0.2 to 1.0 mm. When the thickness of the resin layer is 0.1 mm or more, penetrating resistance and sound insulating properties are improved. When the thickness of the resin layer 16 is 2.0 mm or less, air bubbles are difficult to remain in the resin layer 16, and the thickness of the window material 10 for vehicles is not unnecessary increased.

A method of adjusting the thickness of the resin layer 16 includes a method of adjusting a thickness of an uncured sealing portion described hereinafter and simultaneously adjusting a supply amount of a liquid curable resin composition for resin layer formation supplied to a region surrounded by the uncured sealing portion.

### (Sealing portion)

The sealing portion 18 is a portion prepared by applying a liquid curable resin composition for sealing portion formation described hereinafter and then curing. Width of the sealing portion 18 is preferably from 0.5 to 10 mm, and more preferably from 1.0 to 5 mm.

### <Process for manufacturing window material for vehicles>

The process for manufacturing a window material for vehicles according to the present invention is a method (α) including the following steps (a1) to (d1), or a method (β) including the following steps (a2) to (d2).

### (Method (α))

(a1) A step of applying a liquid curable resin composition for sealing portion formation to a periphery of a concave surface of a curved glass plate to form an uncured sealing portion.
(b1) A step of supplying a liquid curable resin composition for resin layer formation to a region surrounded by the uncured sealing portion.
(c1) A step of laminating a curved resin plate on the liquid curable resin composition for resin layer formation under a reduced-pressure atmosphere of 100 Pa or less such that a convex surface of the curved resin plate faces the side of the curable resin composition for resin layer formation, thereby obtaining a laminate in which an uncured resin layer including the curable resin composition for resin layer formation is sealed by the curved glass plate, the curved resin plate and the uncured sealing portion.
(d1) A step of curing the uncured sealing portion and the uncured resin layer in a state that the laminate is placed under a pressure atmosphere of 50 kPa or more.

### (Method (β))

(a2) A step of applying a liquid curable resin composition for sealing portion formation to a periphery of a convex surface of a curved resin plate to form an uncured sealing portion.
(b2) A step of supplying a liquid curable resin composition for resin layer formation to a region surrounded by the uncured sealing portion.
(c2) A step of laminating a curved glass plate on the curable resin composition for resin layer formation under a reduced-pressure atmosphere of 100 Pa or less such that a concave surface of the curved glass plate faces the side of the curable resin composition for resin layer formation, thereby obtaining a laminate in which an uncured resin layer including the curable resin composition for resin layer formation is sealed by the curved glass plate, the curved resin plate and the uncured sealing portion.
(d2) A step of curing the uncured sealing portion and the uncured resin layer in a state that the laminate is placed under a pressure atmosphere of 50 kPa or more.

Both the method (α) and the method (β) are a process of forming a resin layer by sealing a liquid curable resin composition for resin layer formation between a curved glass plate and a curved resin plate under a reduced-pressure atmosphere, and curing the sealed curable resin composition for resin layer formation under a high pressure atmosphere such as an atmospheric pressure atmosphere. A sealing of the curable resin composition for resin layer formation under reduced-pressure atmosphere is not a method of injecting the liquid curable resin composition for resin layer formation in a broad space with a narrow gap between the curved glass plate and the curved resin plate, but a method of supplying the curable resin composition for resin layer formation on nearly the entire surface of one member of the curved glass plate and the curved resin plate, laminating with the other member, and sealing the curable resin composition for resin layer formation between the curved glass plate and the curved resin plate.

One example of a process for manufacturing a transparent laminated member by sealing a liquid curable resin composition for resin layer formation under reduced-pressure and curing the curable resin composition for resin layer formation under atmospheric pressure atmosphere is known. For example, a process for manufacturing a transparent laminated member and a curable resin composition used in the manufacturing process are described in W02008/81838 pamphlet and WO2009/16943 pamphlet, which are incorporated herein by reference.

The process for manufacturing a window material for vehicles according to the present invention is described below by reference to the method (α). The method (β) is the same as the method (α), except that the curved glass plate in the method (α) is replaced with a curved resin plate and the curved resin plate in the method (α) is replaced by a curved glass plate. Therefore, the description of the method (β) is omitted.

### (Step (a1))

A liquid curable resin composition for resin layer formation is applied to a periphery of a concave surface of a curved glass plate to form an uncured sealing portion.
The application is conducted using a dispenser, a printing machine or the like.

The uncured sealing portion is required to have hardness to an extent that can maintain interface bonding strength and a shape in such an extent or more that the liquid curable resin composition for resin layer formation does not leak from an interface between the uncured sealing portion and the curved glass plate, and an interface between the uncured sealing portion and the cured resin plate, in a step (c1) described hereinafter. For this reason, a curable resin composition for sealing portion formation having high viscosity is preferably used in the uncured sealing portion. Furthermore, spacer particles having a predetermined particle size may be blended with the curable resin composition for sealing portion formation in order to hold a distance between the curved glass plate and the curved resin plate.

Viscosity of the curable resin composition for sealing portion formation is preferably from 500 to 3,000 Pa.s, more preferably from 800 to 2,500 Pa·s, and further preferably from 1,000 to 2,000 Pa.s. When the viscosity is 500 Pa·s or more, the shape of the uncured sealing portion can be maintained in relatively long period of time, and a height of the uncured sealing portion can sufficiently be maintained. When the viscosity is 3,000 Pa·s or less, the uncured sealing portion can be formed by the application.
The viscosity of the curable resin composition for sealing portion formation is measured with E-type viscometer at 25°C.

The curable resin composition for sealing portion formation may be a photocurable resin composition and may be a thermosetting resin composition. The curable resin composition for sealing portion formation is preferably a photocurable resin composition containing a curable compound and a photopolymerization initiator (C) from that the resin composition can be cured at low temperature and has high curing rate. Furthermore, from that high temperature is not required for the curing, there is no possibility of deformation of the curved resin plate at high temperature.

The photocurable resin composition for sealing portion formation is preferably that the curable compound includes at least one kind of an oligomer (A) having a curable functional group and having a number average molecular weight of from 30,000 to 100,000, and at least one kind of a monomer (B) having a curable functional group and having a molecular weight of from 125 to 600, the proportion of the monomer (B) being from 15 to 50% by mass based on the total mass (100% by mass) of the oligomer (A) and the monomer (B), from the standpoint that the viscosity is easily adjusted to the above range.

The number average molecular weight of the oligomer (A) is from 30,000 to 100,000, preferably from 40,000 to 80,000, and more preferably from 50,000 to 65,000. When the number average molecular weight of the oligomer (A) falls within the above range, the viscosity of the curable resin composition for sealing portion formation is easily adjusted to the above range.
The number average molecular weight of the oligomer (A) is a number average molecular weight in terms of polystyrene, obtained by GPC measurement. In the case that peaks of unreacted low molecular weight components (monomer and the like) appear in the GPC measurement, the number average molecular weight is obtained excluding such peaks.

Examples of the curable functional group of the oligomer (A) include addition-polymerizable unsaturated groups (acryloyloxy group, methacryloyloxy group and the like) and a combination of an unsaturated group and a thiol group. A group selected from an acryloyloxy group and a methacryloyloxy group is preferred from that curing rate is high and a sealing portion having high transparency is obtained. The curable functional group in the oligomer (A) having relatively high molecular weight tends to have lower reactivity than that of the curable functional group in the monomer (B) having relatively low molecular weight. Therefore, there is a possibility that curing of the monomer (B) first proceeds, whereby the viscosity of the whole composition is rapidly increased, and the curing reaction may proceed heterogeneously. In order to minimize the difference in reactivity between those curable functional groups to obtain a homogeneous sealing portion, it is more preferred that the curable functional group of the oligomer (A) is an acryloyloxy group having relatively high reactivity and the curable functional group of the monomer (B) is a methacryloyloxy group having relatively low reactivity.

The oligomer (A) preferably has from 1.8 to 4 curable functional groups on average per one molecule from the standpoints of curability of the photocurable resin composition for sealing portion formation and mechanical properties of the sealing portion.
Examples of the oligomer (A) include a urethane oligomer having a urethane bond, poly(meth)acrylate of polyoxyalkylene polyol, and poly(meth)acrylate of polyester polyol. The urethane oligomer (A1) is preferably used from that mechanical properties of a resin after curing, an adhesion to a curved glass plate or a curved resin plate, and the like can widely be adjusted by molecular design of a urethane chain, and the like.

The urethane oligomer (A1) having a number average molecular weight of from 30,000 to 100,000 has high viscosity, and is therefore difficult to synthesize by general methods. Even if such a urethane oligomer (A1) can be synthesized, the urethane oligomer (A1) is difficult to be mixed with the monomer (B). For this reason, it is preferred in the present invention that after synthesizing the urethane oligomer (A1) by a synthesis method described below, the obtained product is directly used as a photocurable resin composition for sealing portion formation, or the obtained product is diluted with an after-described monomer (B) (monomer (B1), monomer (B3) or the like), and used as a photocurable resin composition for sealing portion formation.

### Synthesis method of urethane oligomer (A1):

A method of reacting polyol with polyisocyanate in the presence of a monomer (B1) that does not have a group reacting with an isocyanate group, which is one kind of a monomer (B) as a diluent to obtain a prepolymer having an isocyanate group, and reacting a monomer (B2) having a group reacting with an isocyanate group, and a curable functional group with the isocyanate of the prepolymer.

Examples of the polyol and polyisocyanate include the conventional compounds such as polyol (i) and diisocyanate (ii) described as raw materials of urethane oligomer (a) described in, for example, WO2009/016943 pamphlet which is incorporated herein by reference.

Examples of the monomer (B1) that does not have a group reacting with an isocyanate group include alkyl (meth)acrylates having a C₈-₂₂ alkyl group (n-dodecyl (meth)acrylate, n-octadecyl (meth)acrylate, n-behenyl (meth)acrylate and the like), and (meth)acrylates having a alicyclic hydrocarbon group (isobornyl (meth)acrylate, adamantyl (meth)acrylate and the like).

Examples of the monomer (B2) having a group reacting with an isocyanate group, and a curable functional group include monomers having active hydrogen (hydroxy group, amino group and the like) and a curable functional group. Specific examples thereof include hydroxyalkyl (meth)acrylates having a C₂₋₆ hydroxyalkyl group (2-hydroxymethyl (meth)acrylate, 2-hydroxypropyl (meth)acrylate, 2-hydroxybutyl (meth)acrylate, 4-hydroxybutyl (meth)acrylate and the like) are exemplified, and hydroxyalkyl acryates having a C₂₋₄ hydroxyalkyl group are preferably used.

The molecular weight of the monomer (B) is from 125 to 600, preferably from 140 to 400, and more preferably from 150 to 350. When the molecular weight of the monomer (B) is 125 or more, volatilization of the monomer (B) is suppressed when producing a window material for vehicles by a reduced-pressure lamination process described hereinafter. When the molecular weight of the monomer (B) is 600 or less, a solubility of the monomer (B) to the oligomer (A) having high molecular weight can be increased, and viscosity adjustment of the photocurable resin composition for sealing portion formation can preferably be performed.

Examples of the curable functional group of the monomer (B) include addition-polymerizable unsaturated groups (acryloyloxy group, methacryloyloxy group and the like), and a combination of an unsaturated group and a thiol group. A group selected from an acryloyloxy group and a methacryloyloxy group is preferred from that curing rate is high and a sealing portion having high transparency is obtained. The curable functional group in the relatively low molecular weight monomer (B) tends to have high reactivity as compared with the curable functional group in the relatively high molecular weight oligomer (A). As a result, curing of the monomer (B) first proceeds, thereby viscosity of the whole composition is rapidly increased, and a curing reaction may proceed heterogeneously. To obtain a homogeneous sealing portion, it is more preferred that the curable functional group of the monomer (B) is a methacryloyloxy group having relatively low reactivity, and the curable functional group of the oligomer (A) is an acryloyloxy group having relatively high reactivity.
The monomer (B) preferably has from 1 to 3 curable functional groups per one molecule from the standpoints of curability of the photocurable resin composition for sealing portion formation and mechanical properties of the sealing portion.

The photocurable resin composition for sealing portion formation may contain the monomer (B1) used as a diluent in the synthesis method of the urethane oligomer (A1) described above, as the monomer (B). Furthermore, the photocurable resin composition for sealing portion formation may contain the unreacted monomer (B2) used in the synthesis method of the urethane oligomer (A1) described above, as the monomer (B).

The monomer (B) preferably contains a monomer (B3) containing a hydroxyl group from the standpoints of adhesion between the curved glass plate or the curved resin plate and the sealing portion, and a solubility of after-described various additives.
As the monomer (B3), a hydroxyl methacrylate having a C₃₋₈ hydroxyalkyl group wherein the number of hydroxy groups is 1 or 2 (2-hydroxypropyl methacrylate, 2-hydroxybutyl methacrylate, 4-hydroxybutyl methacrylate, 6-hydroxyhexyl methacrylate and the like) are preferred, and 2-hydroxybutyl methacrylate is particularly preferred.

The proportion of the monomer (B) is from 15 to 50% by mass, preferably from 20 to 45% by mass, and more preferably from 25 to 40% by mass, based on the total mass (100% by mass) of the oligomer (A) and the monomer (B). When the proportion of the monomer (B) is 15% by mass or more, the curability of the photocurable resin composition for sealing portion formation, and adhesion between the curved glass plate or the curved resin plate and the sealing portion are improved. When the proportion of the monomer (B) is 50% by mass or less, the viscosity of the photocurable resin composition for sealing portion formation is easily adjusted to 500 Pa·s or more.

Examples of the photopolymerization initiator (C) include photopolymerization initiators of acetophenone type, ketal type, benzoin or benzoin ether type, phosphine oxide type, benzophenone type, thioxanthone type, quinone type and the like. When two kinds or more of photopolymerization initiators (C) having different absorption wavelength regions are used together, curing time can be further shortened and surface curability in the sealing portion can be increased.
The amount of the photopolymerization initiator (C) is preferably from 0.01 to 10 parts by mass, and more preferably from 0.1 to 2.5 parts by mass, per 100 parts by mass of the sum of the oligomer (A) and the monomer (B).

If desired, the photocurable resin composition for sealing portion formation of the present invention may contain various additives such as heat absorbers, polymerization inhibitors, photocuring accelerators, chain transfer agents, light stabilizers (ultraviolet light absorbers, radical trapping agents and the like), antioxidants, flame retardants, adhesion improvers (silane coupling agent and the like), pigments and dyes, and preferably contains polymerization inhibitors and light stabilizers. Particularly, when the polymerization inhibitor is contained in an amount smaller than that of the polymerization initiator, a stability of the photocurable resin composition for sealing portion formation can be improved, and the molecular weight of a resin layer after curing can be also adjusted.

Examples of the polymerization inhibitor include hydroquinione type (2,5-di-t-butyl hydroquinone and the like), catechol type (p-t-butyl catechol and the like), anthraquinone type, phenothiazine type and hydroxytoluene type.
Examples of the light stabilizer include ultraviolet light absorbers (benzotriazole type, benzophenone type, salicylate and the like), and radical trapping agents (hindered amine type).
Examples of the antioxidant include a phosphorus type and a sulfur type compounds.

The total amount of various additives is preferably 10 parts by mass or less, and more preferably 5 parts by mass, per 100 parts by mass of the sum of the oligomer (A) and the monomer (B).

### (Step(b1))

After the step (a1), a liquid curable resin composition for resin layer formation is supplied to a region surrounded by the uncured sealing portion.
The supplied amount of the liquid curable resin composition for resin layer formation is previously set to be such an amount that a space formed by the uncured sealing portion, the curved glass plate and the curved resin plate is filled with the liquid curable resin composition for resin layer formation, and a distance between the curved glass plate and the curved resin plate is made to be a predetermined distance (that is, the resin layer has a predetermined thickness). In this case, it is preferred to previously consider volume reduction by curing shrinkage of the curable resin composition for resin layer formation. Therefore, the supplied amount is preferably such an amount that the thickness of the curable resin composition for resin layer formation is slightly larger than the predetermined thickness of the resin layer.
The supply method includes a method of placing the curved glass plate horizontally and supplying the curable resin composition for resin layer formation in a dot shape, a line shape or a sheet shape by a supplying means such as a disperser or a die coater.

The viscosity of the curable resin composition for resin layer formation is preferably from 0.05 to 50 Pa.s, and more preferably from 1 to 20 Pa·s. When the viscosity is 0.05 Pa·s or more, the proportion of a monomer (B') described hereinafter can be reduced, and a deterioration of the physical properties of the resin layer can be prevented. Furthermore, the amount of low boiling point component becomes less, such a resin composition is preferable to after-described reduced-pressure lamination process. When the viscosity is 50 Pa·s or less, air bubbles are difficult to remain in the resin layer.
The viscosity of the curable resin composition for resin layer formation is measured using an E-type viscometer at 25°C.

The curable resin composition for resin layer formation may be a photocurable resin composition or a thermosetting resin composition. The curable resin composition for resin layer formation is preferably a photocurable resin composition containing a curable compound and a photopolymerization initiator (C') from the standpoints of that the curable resin composition can be cured at low temperature and curing rate is high. Furthermore, since the curing does not require high temperature, the possibility of deformation of the cured resin plate by high temperature is low.

From the standpoints of that the viscosity can be easily adjusted to be within the above range, the photocurable resin composition for resin layer formation is preferably contains at least one kind of an oligomer (A') having a curable functional group and having a number average molecular weight of from 1,000 to 100,000 and at least one kind of a monomer (B') having a curable functional group and having a molecular weight of from 125 to 600 as a above-described curable compound, wherein the proportion of the monomer (B') is from 40 to 80% by mass based on the total mass (100% by mass) of the oligomer (A') and the monomer (B').

The number average molecular weight of the oligomer (A') is from 1,000 to 100,000, and preferably from 10,000 to 70,000. When the number average molecular weight of the oligomer (A') falls within the above range, the viscosity of the photocurable resin composition for resin layer formation can be easily adjusted to be within the above range.
The number average molecular weight of the oligomer (A') is a number average molecular weight in terms of polystyrene, obtained by GPC measurement. In the case that peaks of unreacted low molecular weight components (monomer and the like) appear in the GPC measurement, the number average molecular weight is obtained excluding such peaks.

Examples of the curable functional group of the oligomer (A') include addition-polymerizable unsaturated groups (acryloyloxy group, methacryloyloxy group and the like), or a combination of an unsaturated group and a thiol group. A group selected from an acryloyloxy group and a methacryloyloxy group is preferred from the standpoints of high curing rate and obtained resin layer has high transparency. The curable functional group of the relatively high molecular weight oligomer (A') tends to have lower reactivity than that of the curable functional group in the relatively low molecular weight monomer (B'). Therefore, there is a possibility that curing of the monomer (B') first proceeds, whereby the viscosity of the whole composition is rapidly increased, and the curing reaction may proceed heterogeneously. In order to obtain a homogeneous resin layer, it is more preferred that the curable functional group of the oligomer (A') is an acryloyloxy group having relatively high reactivity and the curable functional group of the monomer (B') is a methacryloyloxy group having relatively low reactivity.

The oligomer (A') preferably has from 1.8 to 4 curable functional groups on average per one molecule from the standpoints of curability of the photocurable resin composition for resin layer formation and mechanical properties of the resin layer.
Examples of the oligomer (A') include a urethane oligomer having a urethane bond, a poly(meth)acrylate of a polyoxyalkylene polyol, or a poly(meth)acrylate of a polyester polyol. The urethane oligomer is preferably used from the standpoints of that the mechanical properties of a resin after curing, the adhesion to a curved glass plate or a curved resin plate, and the like can widely be adjusted by molecule design of a urethane chain, and the like.

The proportion of the oligomer (A') is preferably from 20 to 60% by mass, and more preferably from 30 to 50% by mass, based on the total mass (100% by mass) of the oligomer (A') and the monomer (B'). When the proportion of the oligomer (A') is 20% by mass or more, heat resistance of the resin layer is improved. When the proportion of the oligomer (A') is 60% by mass or less, the curability of the photocurable resin composition for resin layer formation and the adhesion between the curved glass plate or the curved resin plate and the resin layer are improved.

The molecular weight of the monomer (B') is from 125 to 600, and preferably from 140 to 400. When the molecular weight of the monomer (B') is 125 or more, volatilization of the monomer is suppressed when producing a display device by a reduced-pressure lamination process described hereinafter. When the molecular weight of the monomer (B') is 600 or less, adhesion between the curved glass plate or the curved resin plate and the resin layer is improved.

Examples of the curable functional group of the monomer (B') include addition-polymerizable unsaturated groups (acryloyloxy group, methacryloyloxy group and the like), or a combination of an unsaturated group and a thiol group. A group selected from an acryloyloxy group and a methacryloyloxy group is preferred from the standpoints of a high curing rate and high transparency of the obtained-resin layer. The curable functional group of the relatively low molecular weight monomer (B') tends to have higher reactivity than that of the curable functional group in the relatively high molecular weight oligomer (A'). As a result, curing of the monomer (B') first proceeds, thereby the viscosity of the whole composition is rapidly increased, and the curing reaction may proceed heterogeneously. To obtain a homogeneous resin layer, it is more preferred that the curable functional group of the monomer (B') is a methacryloyloxy group having relatively low reactivity and the curable functional group of the oligomer (A') is an acryloyloxy group having relatively high reactivity.
The monomer (B') preferably has from 1 to 3 curable functional groups per one molecule from the standpoints of curability of the photocurable resin composition for resin layer formation and mechanical properties of the resin layer.

The monomer (B') preferably contains a monomer (B3) containing a hydroxyl group from the standpoint of the adhesion between the curved glass plate or the curved resin plate and the resin layer.
Examples of the monomer (B3) having a hydroxyl group include the same monomers as the monomer (B3) in the photocurable resin composition for sealing portion formation, and 2-hydroxybutyl methacrylate is particularly preferred.

The proportion of the monomer (B3) is preferably from 15 to 70% by mass, and more preferably from 20 to 50% by mass, based on the total mass (100% by mass) of the oligomer (A') and the monomer (B'). When the proportion of the monomer (B3) is 15% by mass or more, the curability of the photocurable resin composition for resin layer formation, and the adhesion between the curved glass plate or the curved resin plate and the resin layer are improved.

The monomer (B') preferably contains the following monomer (B4) from the standpoint of mechanical properties of the resin layer.
Monomer (B4): An alkyl methacrylate having C₈₋₂₂ alkyl group.
Examples of the monomer (B4) include n-dodecyl methacrylate, n-octadecyl methacrylate or n-behenyl methacrylate, preferably n-dodecyl methacrylate or n-octadecyl methacrylate.

The proportion of the monomer (B4) is preferably from 5 to 50% by mass, and more preferably from 15 to 40% by mass, based on the total mass (100% by mass) of the oligomer (A') and the monomer (B'). When the proportion of the monomer (B4) is 5% by mass or more, a flexibility of the resin layer is improved.

Examples of the photopolymerization initiator (C') include photopolymerization initiators of acetophenone type, ketal type, benzoin or benzoin ether type, phosphine oxide type, benzophenone type, thioxanthone type, quinone type and the like. When two kinds or more of photopolymerization initiators (C') having different absorption wavelength regions are used together, curing time can be further shortened.
The amount of the photopolymerization initiator (C') is preferably from 0.01 to 10 parts by mass, and more preferably from 0.1 to 2.5 parts by mass, per 100 parts by mass of the sum of the oligomer (A') and the monomer (B').

If desired, the photocurable resin composition for resin layer formation may contain various additives such as heat absorbers, polymerization inhibitors, photocuring accelerators, chain transfer agents, light stabilizers (ultraviolet light absorbers, radical trapping agents and the like), antioxidants, flame retardants, adhesion improvers (silane coupling agent and the like), pigments, dyes, and preferably contains polymerization inhibitors and light stabilizers. Particularly, when the polymerization inhibitor is contained in an amount smaller than that of the polymerization initiator, the stability of the photocurable resin composition for resin layer formation can be improved, and the molecular weight of a resin layer after curing can also be adjusted.

### (Step(c1))

After the step (b1), the curved glass plate having supplied thereon the curable resin composition for resin layer formation is placed in a reduced pressure apparatus, and placed horizontally on a fixed supporting board in the reduced pressure apparatus such that the curable resin composition for resin layer formation faces up.
A vertically movable support mechanism is provided in the upper part in the reduced pressure apparatus, and the curved resin plate is attached to it, so as to the convex surface faces down.
The curved resin plate is held at a position above the curved glass plate and at a position that does not come into contact with the curable resin composition for resin layer formation. That is, the curable resin composition for resin layer formation on the surface of the curved glass plate and the curved resin plate are faced to each other so as not to contact with each other.

The vertically movable support mechanism may be provided in a lower part in the reduced pressure apparatus, and the curved glass plate having supplied thereon the curing resin composition for resin layer formation may be placed on the movable support mechanism. In this case, the curved resin plate is attached to the fixed supporting board provided in an upper part in the reduced pressure apparatus, so as to face the curved glass plate and the curved resin plate. Furthermore, both of the curved glass plate and the curved resin plate may be supported by the movable support mechanism provided up and down in the reduced pressure apparatus.

After arranging the curved glass plate and the curve resin plate at predetermined positions, the pressure of the inner side of the reduced pressure apparatus is depressurized to a predetermined reduced-pressure atmosphere. If possible, during the depressurizing operation or after depressurized to a predetermined reduced-pressure atmosphere, the curved glass plate and the curved resin plate may be located at predetermined positions in the reduced pressure apparatus.
After the inner side of the reduced pressure apparatus becomes to be a predetermined reduced-pressure atmosphere, the curved resin plate supported by the movable support mechanism is moved down, and the curved resin plate is laminated on the curable resin composition for resin layer formation on the surface of the curved glass plate.

By the lamination, the curable resin composition for resin layer formation is sealed in a space surrounded by the surface of the curved glass plate, the curved resin plate and the uncured sealing portion.
In laminating, the curable resin composition for resin layer formation is pushed and spread by the own weight of the curved resin plate, pressing force from the movable support mechanism, and the like, so that the above-mentioned space is filled with the photocuring resin composition for resin layer formation, and the uncured resin layer is formed. When the uncured resin layer is exposed to a high pressure atmosphere in a step (d), the uncured resin layer having few or no air bubbles is obtained.

The reduced-pressure atmosphere in laminating is preferably 100 Pa or less, and preferably 10 Pa or less. Where the reduced-pressure atmosphere is too low, the reduced-pressure atmosphere may adversely affect each component (curable compound, photopolymerization initiator, polymerization inhibitor, light stabilizer and the like) contained in the resin composition for resin layer formation. For example, in the case where the reduced-pressure atmosphere is too low, each component may volatilize, and furthermore, it may be required much time to achieve the reduced-pressure atmosphere. The pressure of the reduced-pressure atmosphere is more preferably from 15 to 40 Pa.

A period of time from the time that the curved glass plate and the curved resin plate are laminated to the time that the release of the reduced-pressure atmosphere is not particularly limited. After sealing the curable resin composition for resin layer formation, the reduced-pressure atmosphere may immediately be released, or after sealing the curable resin composition for resin layer formation, the reduced-pressure state may be maintained for a predetermined period of time. When the reduced-pressure state is maintained for a predetermined period of time, the curable resin composition for resin layer formation flows in the sealed space, and the distance between the curved glass plate and the curved resin plate becomes uniform, whereby even if the pressure of atmosphere is increased, the sealed state is easily maintained. The period of time for maintaining the reduced-pressure state may be long time of several hours or more. However, the time is preferably 1 hour or less, and more preferably 10 minutes or less, from the standpoint of production efficiency.

### (Step(d1))

After releasing the reduced-pressure atmosphere in the step (c1), the laminate is placed under an atmosphere having a pressure of 50 kPa or more.
When the laminate is placed in an atmosphere having a pressure of 50 kPa or more, the curved glass plate and the curved resin plate are pushed in their adhering direction by the increased pressure. Therefore, when the air bubbles are present in the sealed space in the laminate, the uncured resin layer flows into the air bubbles, and the whole sealed space is uniformly filled with the uncured resin layer.

The pressure in the atmosphere is generally from 80k to 120 kPa. The pressure atmosphere may be atmospheric pressure, or may be a pressure higher than the atmospheric pressure. The pressure in the atmosphere is most preferably atmospheric pressure from the standpoint of that the operation of curing of an uncured resin layer, and the like can be conducted without requiring any specific facilities.

The period of time from the time that the laminate is placed under the pressure atmosphere of 50 kPa or more (hereinafter referred to as a "high pressure retention time") to the time that the initiation of the curing of the uncured resin layer is not particularly limited. In the case that a process of taking out the laminate from the reduced pressure apparatus and transferring it to a curing apparatus, and then initiating the curing is conducted under an atmospheric pressure, the time required in the process is the high pressure retention time. Therefore, in the case that air bubbles are not present in the sealed space of the laminate at the time of when the laminate is placed under an atmospheric pressure, or air bubbles disappear during the above-described process, the uncured resin layer can immediately be cured. In a case where it takes time until air bubbles disappear, the laminate is held under pressure atmosphere of 50 kPa or more until the air bubbles disappear. Furthermore, since there is no problem even though the high pressure retention time is long, the high pressure retention time may be prolonged, because of the other necessity on process. The high pressure retention time may be as long as more than one day. However, the high pressure retention time is preferably 6 hours or less, and more preferably 1 hour or less, from the standpoint of production efficiency, and is particularly preferably 10 minutes or less from the standpoint of high production efficiency.

The uncured resin layer is cured. As a result, the resin layer for laminating the curved glass plate and the curved resin plate is formed, and a window material for vehicles is manufactured. In this case, the uncured sealing portion may be cured simultaneously with the curing of the uncured resin layer, and may previously be cured before the curing of the uncured resin layer.

In the case that the uncured resin layer and the uncured sealing portion include a photocurable composition, those are cured by irradiating with light. For example, ultraviolet light or visible light having short wavelength are emitted from a light source (ultraviolet light lamp, high pressure mercury lamp, UV-LED or the like) to cure the photocurable resin composition.
The light is preferably ultraviolet light or visible light of 450 nm or less.
In the case that a light shielding part such as black ceramic printing is formed at a periphery part at the concave surface side of the curved glass plate, light is emitted from the surface side of the curved resin plate or light is emitted from a lateral side of the laminate, thereby the uncured sealing portion or the uncured resin layer arranged at the light shielding part can be cured. In the case that light is emitted from the surface side of the curved resin plate, a curved resin plate including a resin that permeates light having wavelength necessary for the curing of the uncured resin layer or the uncured sealing portion is used. The light shielding part at the periphery of the laminate can be provided at the curved resin plate side, and in this case, light is emitted from the surface side of the curved glass plate. The light may be emitted from both of the surface side of the curved glass plate and the surface side of the curved resin plate.

### (Specific examples)

The process for manufacturing a window material for vehicles shown in Fig. 1 is specifically described below using the drawings by reference to the case of the method (α).

### (Step (a1))

As shown in Figs. 2 and 3, a photocurable resin composition for sealing portion formation is applied to a periphery of a concave surface of a curved glass plate 12 by a dispenser (not shown) or the like to form an uncured sealing portion 20.

### (Step (b1))

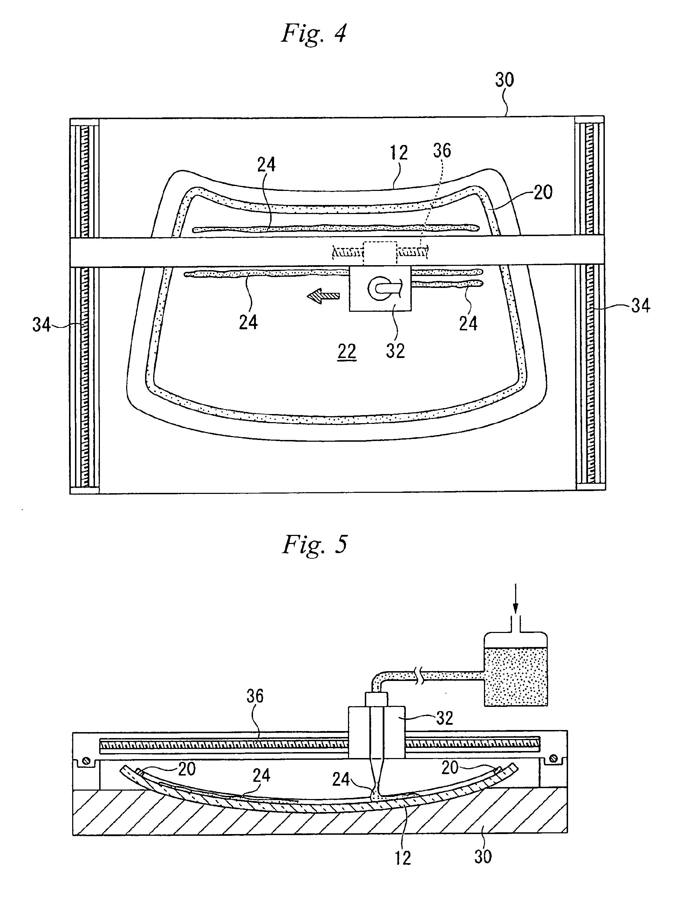

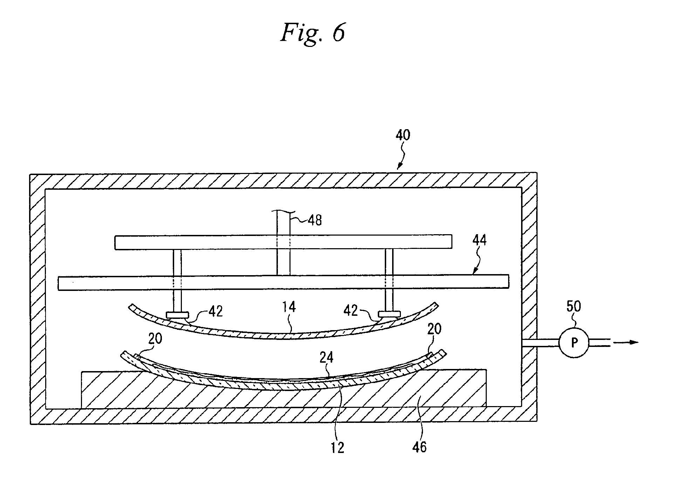

As shown in Figs. 4 and 5, a photocurable resin composition 24 for resin layer formation is supplied to a rectangular region 22 surrounded by the uncured sealing portion 20 of the curved glass plate 12. The supplied amount of the photocurable resin composition 24 for resin layer formation is previously set to be such a quantity that a space sealed by the uncured sealing portion 20, the curved glass plate 12 and a curved resin plate 14 (see Fig. 6) is filled with the photocurable resin composition 24 for resin layer formation.

The supply of the photocurable resin composition 24 for resin layer formation is carried out by placing the curved glass plate 12 horizontally on a lower press platen 30 and supplying the photocurable resin composition 24 for resin layer formation in a line shape, a ribbon shape or a dot shape by a dispenser 32 moving in a horizontal direction, as shown in Figs. 4 and 5.
The dispenser 32 is horizontally movable in an entire range of the region 22 by the conventional horizontally movable mechanism including a pair of feed screws 34 and a feed screw 36 that is perpendicular to the feed screws 34. A die coater may be used in place of the dispenser 32.

### (Step (c1))

As shown in Fig. 6, the curved glass plate 12 and the curved resin plate 14 are placed in a reduced pressure apparatus 40. An upper press platen 44 having a plurality of adsorption pads 42 is arranged in an upper part of the reduced pressure apparatus 40, and a lower press platen 46 having a concave surface having nearly the same curvature radius as that of the curved glass plate 12 is arranged in a lower part thereof. The upper press platen 44 is movable up and down by an air cylinder 48.
The curved resin plate 14 is attached to the adsorption pad 42 such that a convex surface thereof faces down. The curved glass plate 12 is fixed to the lower press platen 46 such that the photocurable resin composition 24 for resin layer formation faces up.

An air in the reduced pressure apparatus 40 is suctioned by a vacuum pump 50. After the pressure in the reduced pressure apparatus 40 has reached a reduced-pressure of, for example, from 15 to 40 Pa, the air cylinder 48 is operated and the curved resin plate 14 is moved down toward the curved glass plate 12 waiting in a lower part in a state that the curved resin plate 14 is adsorption-held by the absorption pads 42 of the upper press platen 44. The curved glass plate 12 and the curved resin plate 14 are laminated through the uncured sealing portion 20 to constitute a laminate in which an uncured resin layer including the photocurable resin composition 24 for resin layer formation is sealed with the curved resin plate 14, the curved glass plate 12 and the uncured sealing portion 20, and the laminate is held in a reduced-pressure atmosphere for a predetermined period of time.

An attachment position of the curved glass plate 12 to the lower press platen 46, a number of the adsorption pads 42, an attachment position of the curved resin plate 14 to the upper press platen 44, and the like are appropriately adjusted according to a size, a shape and the like of the curved glass plate 12 and the curved resin plate 14. In this case, when an electrostatic chuck is used as an adsorption pad and an electrostatic chuck holding method described in the specification (incorporated herein) attached to Japanese Patent Application No. 2008-206124 is employed, a glass substrate can stably be held in a reduced-pressure atmosphere.

### (Step (d1))

After returning the pressure in the inner side of the reduced pressure apparatus 40 to be an atmospheric pressure atmosphere, the laminate is taken out from the reduced pressure apparatus 40. When the laminate is placed under the atmospheric pressure atmosphere, the surface side of the curved glass plate 12 of the laminate and the surface side of the curved resin plate 14 of the laminate are pressed by the atmospheric pressure, and the photocurable resin composition 24 for resin layer formation in the sealed space is pressed by the curved glass plate 12 and the curved resin plate 14. By the above-described pressure, the uncured resin layer in the sealed space flows, and the whole sealed space is uniformly filled with the uncured resin layer.

The uncured sealing portion 20 and the uncured resin layer are irradiated with light (ultraviolet light) from the surface side of the curved glass plate 12 and/or the curved resin plate 14 to cure the uncured sealing portion 20 and the uncured resin layer in the laminate. Thus, a window material 10 for vehicles is manufactured.

The process for manufacturing the window material for vehicles of the present invention is specifically described above by reference to the method (α), but the method (β) can similarly manufacture the window material for vehicles.

### (Effects)

In the process for manufacturing the window material for vehicles of the present invention described above, the curved glass plate and the curved resin plate are laminated through the resin layer. Therefore, the window material for vehicles satisfying both of weight saving and properties (penetration resistance, sound insulating properties, and the like) of a laminated glass can be manufactured.

Furthermore, in the process for manufacturing the window material for vehicles of the present invention described above, the liquid curable resin composition for resin layer formation is sealed between the curved glass plate and the curved resin plate under the reduced-pressure atmosphere. Therefore, the window material for vehicles, having relatively large area can be manufactured without generating air bubbles in the laminate. Even if air bubbles remain in the uncured resin layer sealed under the reduced-pressure atmosphere, the sealed uncured resin layer is exposed to a high pressure atmosphere before curing. As a result, the air bubbles decrease their volumes, and easily disappear. For example, it is considered that a volume of a gas in air bubbles in the uncured resin layer sealed under 100 Pa is decreased to 1/1000 under 100 kPa. The gas may be dissolves in the uncured resin layer. Therefore, the gas in air bubbles having a very small volume rapidly dissolves in the uncured resin layer and then it disappears.

As compared with a method (injection method) of injecting a flowable curable resin composition for resin layer formation in a narrow space having a wide area between the curved glass plate and the curved resin plate, the process according to the present invention can fill the curable resin composition for resin layer formation in a short period time with less generation of air bubbles. Furthermore, a restriction on viscosity of the curable resin composition for resin layer formation is small, and a high viscosity curable resin composition for resin layer formation can easily be filled. Therefore, the high viscosity curable resin composition for resin layer formation containing a relatively high molecular weight curable compound that improves a mechanical strength of the resin layer can be used.

An interface bonding strength between the resin layer and the curved glass plate and between the resin layer and the curved resin plate obtained by the curing of the curable resin composition for resin layer formation is higher than the interface bonding strength by fusion of a thermal adhesive resin. Furthermore, the flowable curable resin composition for resin layer formation is pressed and adhered to the surfaces of the curved glass plate and the curved resin plate, and then cured in such a state. Therefore, strong interface bonding strength is obtained, and additionally, uniform adhesion to the surfaces of the curved glass plate and the curved resin plate are obtained. As a result, the interface bonding strength is less likely to be partially decreased. Therefore, there is low possibility that exfoliation occurs at the surface of the resin layer.

Furthermore, in the process for manufacturing the window material for vehicles of the present invention described above, excessive pressure and heat are not simultaneously applied. Therefore, deformation of the curved resin plate and the window material for vehicles is suppressed.

### EXAMPLES

Examples are shown below to confirm an effectiveness of the present invention. Example 1 is Invention Example, and Example 2 is Comparative Example.

### (Number average molecular weight)

A number average molecular weight of an oligomer was obtained using GPC apparatus (manufactured by Tosoh Corporation, HLC-8020).

### (Viscosity)

A viscosity of a photocurable resin composition was measured with an E-type viscometer (manufactured by Toki Sangyo Co., Ltd., RE-85U).

### (Haze value)

A Haze value was obtained according to ASTM D1003, using Haze Guard II manufactured by Toyo Seiki Seisaku-Sho, Ltd.

### [Example 1]

### (Curved glass plate)

A rectangular curved glass plate A (long side: 600 mm, short side: 500 mm, thickness: 3.0 mm, curvature radius: 4000 mm in long side direction and 1000 mm in short side) obtained by subjecting a soda lime glass plate to bending process was provided.

### (Curved resin plate)

A rectangular curved plate (long side: 600 mm, short side: 500 mm, thickness: 0.5 mm, curvature radius: 4000 mm in long side direction and 1000 mm in short side) obtained by subjecting a polycarbonate plate to bending process was provided.

### (Photocurable resin composition for sealing portion formation)

A bifunctional polypropylene glycol having molecular terminals modified with ethylene oxide (number average molecular weight calculated from hydroxyl value: 4000) and hexamethylene isocyanate were mixed in a molar ratio of 6:7. The resulting mixture was diluted with isobornyl acrylate (manufactured by Osaka Organic Chemical Industry Ltd., IBXA), followed by a reaction in the presence of a catalyst of a tin compound at 70°C to obtain a prepolymer. A 2-hydroxyethyl acrylate was added to the prepolymer in a molar ratio of nearly 1:2, and reaction was conducted at 70°C to obtain a urethane acrylate oligomer (hereinafter referred to as "UC-1") diluted with 30% by mass of isobornyl acrylate. The UC-1 had the number of curable functional groups of 2 and the number average molecular weight of about 55000. The viscosity at 60°C of the UC-1 solution was about 580 Pa·s.

90 parts by mass of the UC-1 solution and 10 parts by mass of 2-hydroxybutyl methacrylate (manufactured by Kyoeisha Chemical Co., Ltd., LIGHT ESTER HOB) were uniformly mixed to obtain a mixture. 100 parts by mass of the mixture, 0.9 part by mass of 1-hydroxy-cyclohexyl-phenyl-ketone (photopolymerization initiator, manufactured by Ciba Specialty Chemicals, IRGACURE 184), 0.1 part by mass of bis(2,4,6-trimethylbenzoyl)-phenylphosphine oxide (photopolymerization initiator, manufactured by Ciba Specialty Chemicals, IRGACURE 819), and 0.04 part by mass of 2,5-di-t-butylhydroquinone (polymerization inhibitor) were uniformly mixed to obtain a photocurable resin composition C for sealing portion formation.

The photocurable resin composition C for sealing portion formation was put in a reduced pressure apparatus in an open state while placing the composition C in a vessel, the pressure in the reduced pressure apparatus was depressurized to about 20 Pa, and the composition C was held therein for 10 minutes to conduct defoaming treatment. The viscosity at 25°C of the photocurable resin composition C for sealing portion formation was measured, and was found to be about 1400 Pa.s.

### (Photocurable resin composition for resin layer formation)

The bifunctional polypropylene glycol having molecular terminals modified with ethylene oxide (number average molecular weight calculated from hydroxyl value: 4000) and isophorone diisocyanate were mixed in a molar ratio of 4:5. A reaction was conducted in the presence of the catalyst of a tin compound at 70°C to obtain a prepolymer. The 2-hydroxyethyl acrylate was added to the prepolymer in a molar ratio of nearly 1:2, and reaction was conducted at 70°C to obtain a urethane acrylate oligomer (hereinafter referred to as "UA-2"). The UA-2 had the number of curable functional groups of 2, a number average molecular weight of about 24000, and viscosity at 25°C of about 830 Pa·s.

40 parts by mass of the UA-2, 24 parts by mass of 2-hydroxybutyl methacrylate (manufactured by Kyoeisha Chemical Co., Ltd., LIGHT ESTER HOB) and 36 parts by mass of n-dodecyl methacrylate were uniformly mixed to obtain a mixture. 0.2 part by mass of bis(2,4,6-trimethylbenzoyl)-phenylphosphine oxide (photopolymerization initiator, manufactured by Ciba Specialty Chemicals, IRGACURE 819), 0.04 part by mass of 2,5-di-t-butylhydroquinone (polymerization inhibitor), 1 part by mass of 1,4-bis(3-mercaptobutylyloxy)butane (chain transfer agent, manufactured by Showa Denko K.K., KARENZ MT BD-1) and 0.3 part by mass of an ultraviolet light absorber (manufactured by Ciba Specialty Chemicals, TINUVIN 109) were uniformly dissolved in 100 parts by mass of the mixture to obtain a photocurable resin composition D for resin layer formation.

The photocurable resin composition D for resin layer formation was put in a reduced pressure apparatus in an open state while placing the composition D in a vessel, the pressure in the reduced pressure apparatus was depressurized to about 20 Pa, and the composition D was held therein for 10 minutes to conduct defoaming treatment. The viscosity at 25°C of the photocurable resin composition D for resin layer formation was measured, and was found to be 1.7 Pa.s.

### (Step (a1))

The photocurable resin composition C for sealing portion formation was applied to the entire periphery of a concave surface of the curved glass plate A by a dispenser such that a width is about 4 mm and a coating thickness is about 0.6 mm, thereby forming an uncured sealing portion.

### (Step (bl))

The photocurable resin composition D for resin layer formation was supplied to a plurality of places on a region surrounded by the uncured sealing portion applied to the periphery of the convex surface of the curved glass plate A using a dispenser such that the total mass is 120 g.
During supplying the photocurable resin composition D for resin layer formation, the shape of the uncured sealing portion was maintained.

### (Step (c1))

The curved glass plate A was placed horizontally on an upper surface of a lower press platen in a reduced pressure apparatus having arranged therein a lifting and lowering device of a pair of press platens such that the photocurable resin composition D for resin layer formation faces up.
The curved resin plate B was held on a lower surface of an upper press platen of the lifting and lowering device in the reduced pressure apparatus using an electrostatic chuck such that the convex surface faces the curved glass plate A in such a manner that a distance to the curved glass plate A is 30 mm.

The reduced pressure apparatus was made to be a sealed state, and an evacuation was conducted until the pressure in the reduced pressure apparatus reaches about 10 Pa. The upper and lower press platens were got close to each other by the lifting and lowering device in the reduced pressure apparatus, and the curved glass plate A and the curved resin plate B were pressed with a pressure of 2 kPa through the photocurable resin composition D for resin layer formation, and held for 1 minute. The electrostatic chuck was neutralized, the curved resin plate B was released from the upper press platen, the pressure in the reduced pressure apparatus was returned to the atmospheric pressure in a period of about 15 seconds, and a laminate E in which an uncured resin layer including the photocurable resin composition D for resin layer formation was sealed by the curved glass plate A, the curved resin plate B and the uncured sealing portion was obtained.
In the laminate E, the shape of the uncured sealing portion was maintained in nearly initial state.

### (Step (d1))

The laminate E was uniformly irradiated with ultraviolet rays from a chemical lamp and visible light of 450 nm or less to cure the uncured sealing portion (photocurable resin composition C for sealing portion formation) and the uncured resin layer (photocurable resin composition D for resin layer formation), thereby a sealing portion and a resin layer were formed. Thus, a window material F for vehicles was obtained. In the window material F for vehicles, defects such as air bubbles remaining in the resin layer were not confirmed. Furthermore, defects such as leakage of the photocurable resin composition for resin layer formation from the sealing portion were not confirmed. The thickness of the resin layer was the target thickness (about 0.4 mm).
A haze value of the window material F for vehicles was measured, and was found to be 1% or less. Thus, the window material F for vehicles was a good product having high transparency.

### [Example 2]

A double-sided adhesive tape having a thickness of 0.4 mm and a width of 4 mm was adhered to a periphery of a concave surface of the curved glass plate A, only a release tape of the double-sided adhesive tape of one side was remained, and a release film on the surface was peeled. The curved resin plate B was laminated on the curved glass plate A, and the laminate was adhered with the double-sided adhesive tape along three sides.
The interface between the double-sided adhesive tape having thereon a release film at one side and the curved resin plate B was forced open about 2 mm with a screwdriver, and 120 g of a photocurable resin composition D for resin layer formation was poured into from above-described open space. However, air bubbles remained at a lower part of a space between the curved glass plate A and the curved resin plate B, and the photocurable resin composition D for resin layer formation could not densely be poured in the space.

Although the present invention has been described in detail and by reference to the specific embodiments, it is apparent to one skilled in the art that various modifications or changes can be made without departing the spirit and scope of the present invention.
This application is based on Japanese Patent Application No. 2010-070103 filed on March 25, 2010, the disclosure of which is incorporated herein by reference.

### INDUSTRIAL APPLICABILITY

The window material for vehicles obtained by the manufacturing process of the present invention is useful as a windshield, a side glass, a rear glass and a roof glass of automobiles; glasses of electric trains; and the like.

### DESCRIPTION OF REFERENCE NUMERALS AND SIGNS

- 10: Window material for vehicles
- 12: Curved glass plate
- 14: Curved resin plate
- 16: Resin layer
- 18: Sealing portion
- 20: Uncured sealing portion
- 22: Region surrounded by uncured sealing portion
- 24: Photocurable resin composition for resin layer formation

## Claims

1. A process for manufacturing a window material for vehicles, the window material comprising a curved glass plate, a curved resin plate provided at a side of a concave surface of the curved glass plate and curving along a shape of the curved glass plate, a resin layer sandwiched between the curved glass plate and the curved resin plate, and a sealing portion surrounding a periphery of the resin layer,
the process comprising the following steps (a1) to (d1):
(a1) a step of applying a liquid curable resin composition for sealing portion formation to a periphery of a concave surface of a curved glass plate to form an uncured sealing portion;
(b1) a step of supplying a liquid curable resin composition for resin layer formation to a region surrounded by the uncured sealing portion;
(c1) a step of laminating a curved resin plate on the liquid curable resin composition for resin layer formation under a reduced-pressure atmosphere of 100 Pa or less such that a convex surface of the curved resin plate faces a side of the curable resin composition for resin layer formation, thereby obtaining a laminate in which an uncured resin layer comprising the curable resin composition for resin layer formation is sealed by the curved glass plate, the curved resin plate and the uncured sealing portion; and
(d1) a step of curing the uncured sealing portion and the uncured resin layer in a state that the laminate is placed under a pressure atmosphere of 50 kPa or more.

2. A process for manufacturing a window material for vehicles, the window material comprising a curved glass plate, a curved resin plate provided at a side of a concave surface of the curved glass plate and curving along a shape of the curved glass plate, a resin layer sandwiched between the curved glass plate and the curved resin plate, and a sealing portion surrounding a periphery of the resin layer,
the process comprising the following steps (a2) to (d2):
(a2) a step of applying a liquid curable resin composition for sealing portion formation to a periphery of a convex surface of a curved resin plate to form an uncured sealing portion;
(b2) a step of supplying a liquid curable resin composition for resin layer formation to a region surrounded by the uncured sealing portion;
(c2) a step of laminating a curved glass plate on the curable resin composition for resin layer formation under a reduced-pressure atmosphere of 100 Pa or less such that a concave surface of the curved glass plate faces a side of the curable resin composition for resin layer formation, thereby obtaining a laminate in which an uncured resin layer comprising the curable resin composition for resin layer formation is sealed by the curved glass plate, the curved resin plate and the uncured sealing portion; and
(d2) a step of curing the uncured sealing portion and the uncured resin layer in a state that the laminate is placed under a pressure atmosphere of 50 kPa or more.
